# EUROPÄISCHE PATENTSCHRIFT

(11) **EP 1 431 643 B1**
(45) Veröffentlichungstag und Bekanntmachung des Hinweises auf die Patenterteilung: **11.04.2007**
(21) Anmeldenummer: 03026693.6
(22) Anmeldetag: 20.11.2003
(51) Int. Cl.: F16L 13/14

(54) **Pressverbindungsanordnung und Halteelement für eine Pressverbindung**
Pressfitting and holding element for a pressfitting joint
Raccord à sertissage et élément de retenue pour un raccord à sertissage

(30) Priorität: 18.12.2002 DE 20219600 U
(43) Veröffentlichungstag der Anmeldung: 23.06.2004
(73) Patentinhaber: VIEGA GmbH & Co. KG., 57439 Attendorn (DE)
(72) Erfinder: Viegener, Walter, 57439 Attendorn (DE)
(74) Vertreter: Cohausz & Florack

(56) Entgegenhaltungen:
- EP-A- 0 922 896
- EP-A- 1 201 982
- DE-C- 10 125 304

## Beschreibung

Die vorliegende Erfindung betrifft eine Pressverbindungsanordnung, insbesondere für den Installationsbereich, nach dem Oberbegriff des Anspruches 1 sowie ein Halteelement für eine Pressverbindung nach dem Oberbegriff des Anspruches 7.

Aus der EP-A 922 896 ist eine Pressverbindungsanordnung bekannt, bei der ein Rohr in einen verpressbaren Abschnitt eines Fittings eingeschoben ist, wobei an dem Fitting ein Wulst ausgebildet ist, in dem ein Dichtungsring aufgenommen ist. Benachbart zu dem Wulst ist in einem Abstand eine Aufnahme für ein Halteelement angeordnet. Das Halteelement weist mehrere gekrümmte Zähne auf, die sich beim Verpressen in das Material des Rohres eingraben und so für eine axiale Fixierung des Rohres sorgen. Diese Pressverbindungsanordnung hat sich an sich bewährt, wobei bei der Montage das Problem besteht, dass das Rohr nach dem Einschieben unbeabsichtigt um ein Stück wieder herausrutschen kann und somit die Dichtheit durch die falsche Positionierung des Rohres in dem Fitting bei einem Verpressen gefährdet wird. Da das Rohr nur lose in dem verpressbaren Abschnitt angeordnet ist, muss es zur Sicherheit bei der Montage festgehalten werden, damit es nicht ganz oder teilweise herausrutschen kann.

Es ist daher Aufgabe der vorliegenden Erfindung, eine Pressverbindungsanordnung und ein Halteelement für eine Pressverbindung zu schaffen, die eine einfache Montage ermöglicht und bei denen eine Vorfixierung des Rohres in dem verpressbaren Abschnitt möglich ist.

Diese Aufgabe wird mit einer Pressverbindungsanordnung mit den Merkmalen des Anspruches 1 sowie einem Halteelement für eine Pressverbindung mit den Merkmalen des Anspruches 7 gelöst.

Erfindungsgemäß weist die Pressverbindungsanordnung an dem verpressbaren Abschnitt eine Aufnahme für ein Halteelement auf, wobei an dem Halteelement mindestens eine nach innen hervorstehende Lippe zur Vorfixierung des Rohres an dem Halteelement ausgebildet ist. Die Lippe wird beim Einschieben des Rohres weggedrückt und liegt dadurch klemmend an der Außenwand des Rohres an. Sofern nicht eine erhebliche Kraft zum Herausziehen des Rohres aufgewendet wird, ist dieses durch die mindestens eine Lippe vorfixiert gehalten, so dass bei der Montage das Rohr nicht zusätzlich manuell festgehalten werden muss.

Vorzugsweise ist die mindestens eine Lippe elastisch ausgebildet und kann unter Vorspannung an das Rohr angelegt werden. Durch die Elastizität ist gewährleistet, dass das Einschieben des Rohres leichtgängig erfolgt und der Anschlag an der Lippe nicht versehentlich als Endanschlag aufgefasst wird.

Wenn vor dem Verpressen das Rohr mit einem Spiel zwischen inneren Profilierungen an dem Halteelement angeordnet ist und die mindestens eine Lippe an dem Halteelement das Rohr klemmend vorfixiert, kann das Rohr durch die Lippen geführt entlang eines vorbestimmten Weges eingeschoben werden, ohne dass Verklemmungen auftreten können.

Vorzugsweise ist das Halteelement in der Aufnahme an dem verpressbaren Abschnitt in axialer Richtung des Rohres fixiert gehalten, so dass nach dem Einschieben des Rohres sowohl das Rohr als auch das Halteelement nur unter erheblichem Kraftaufwand noch bewegt werden können.

Die mindestens eine Lippe erstreckt sich benachbart zu dem Halteelement auf der dem offenen Abschnitt des verpressbaren Abschnittes abgewandten Seite zwischen verpressbarem Abschnitt und Rohr. Dadurch wird die Lippe oder Lippen beim Verpressen zwischen dem verpressbaren Abschnitt und dem Rohr eingeklemmt, wobei die Ausrichtung der Lippe automatisch beim Einschieben erfolgt und verhindert wird, dass sich die Profilierungen versehentlich in die Lippe statt dem Rohr eingraben.

Das Halteelement ist vorzugsweise im Querschnitt im wesentlichen rechteckig oder keilförmig ausgebildet, wobei die mindestens eine Lippe an einer inneren Kante des Halteelementes, beispielsweise an der in Einsteckrichtung des Rohres hinteren Kante angeordnet ist.

Vorzugsweise besitzt das Halteelement einen gestuft ausgebildeten Schlitz und die endseitigen Abschnitte sind ineinander fügbar. Dadurch drückt sich beim Verpressen das Rohr nicht in einen geradlinigen Schlitz, was zu Beschädigungen am Rohr führen kann und das Rohr wird vollständig umschlossen. Die Verformung des Rohres während des Verpressens und im späteren Einbau sind gleichmäßig. Ferner lassen sich Zugkräfte zwischen Klemmring und Rohr gleichmäßig verteilen, weshalb die Verbindung höhere Festigkeitswerte besitzt. Schließlich lässt sich ein Halteelement mit gestuftem Schlitz durch die Führung von Schenkeln leichter zusammendrücken, was bei der Montage ein Vorteil ist.

Wenn mehrere Lippen vorgesehen sind, die in Abständen umlaufend an dem Halteelement angeordnet sind, können die Lippen auch zur Zentrierung des Rohres innerhalb des verpressbaren Abschnittes eingesetzt werden, so dass das Rohr gerade eingeführt wird. Bei einem schrägen Einführen besteht die Gefahr, dass ein Dichtring durch eine Stirnkante des Rohres beschädigt wird und ein Teil des Materials abgeschert wird.

Die Erfindung wird nachfolgend anhand eines Ausführungsbeispiels mit Bezug auf die beigefügten Zeichnungen näher erläutert. Es zeigen:
- Fig. 1: eine geschnittene Seitenansicht durch eine erfindungsgemäße Pressverbindungsanordnung vor der Montage;
- Fig. 2: eine geschnittene Seitenansicht der Pressverbindungsanordnung der Fig. 1 vor dem Verpressen im montierten Zustand;
- Fig. 3: eine vergrößerte Detailansicht des Halteelementes der Fig. 2;
- Fig. 4: eine geschnittene Seitenansicht einer modifizierten Pressverbindungsanordnung vor dem Verpressen im montierten Zustand;
- Fig. 5: eine perspektivische Ansicht eines Halteelementes für eine Pressverbindungsanordnung, und
- Fig. 6: eine perspektivische Ansicht eines modifizierten Halteelementes.

Eine Pressverbindungsanordnung umfasst ein Rohr 1 aus Kunststoff, Metall, einem Verbundwerkstoff oder einem anderen geeigneten Material, das in einen verpressbaren Abschnitt 2 eines Fittings 3 oder einer Armatur einschiebbar ist. Sofern die Festigkeit des Rohres 1 gering ist, kann in dem Rohr 1 eine Stützhülse angeordnet sein. Der Fitting 3 oder die Armatur bestehen aus einem kaltumformbaren Material, beispielsweise aus einem metallischen Werkstoff, wie Edelstahl, Rotguss oder Kupfer.

Das Rohr 1 ist bis zu einem Anschlag 4 einschiebbar, wobei eine Stirnkante 14 an dem Anschlag 4 zur Anlage kommt. An dem verpressbaren Abschnitt 2 ist ein Wulst 5 ausgeformt, in dem ein Dichtring 6 aufgenommen ist.

Benachbart zu dem Wulst ist ein zylindrischer Abschnitt 8, an dem sich eine Aufnahme 9 anschließt, die sich nach außen aufweitet. In der Aufnahme 9 ist ein Halteelement 15 aufgenommen. Die Aufnahme 9 wird an dem offenen Ende des verpressbaren Abschnittes 2 durch eine Krümmung 10 begrenzt, so dass das Halteelement 15 unverlierbar in der Aufnahme 9 gehalten ist.

Die Aufnahme 9 besitzt eine konisch ausgebildete Innenfläche 11, die sich zum offenen Ende hin verjüngt. Auf der gegenüberliegenden Seite der Krümmung 10 ist ein Anschlag 12 in Form einer Schulter ausgebildet.

Das Halteelement 15 ist aus Kunststoff oder einem metallischen Werkstoff ausgebildet, der etwas härter ist als der Werkstoff des Rohres 1. An dem Halteelement 15 sind nach innen gerichtete Profilierungen in Form von Zähnen ausgebildet, die sich beim Verpressen in das Material des Rohres 1 eingraben. Das Halteelement 15 kann einen Schlitz aufweisen, damit es in die Aufnahme 9 montierbar ist.

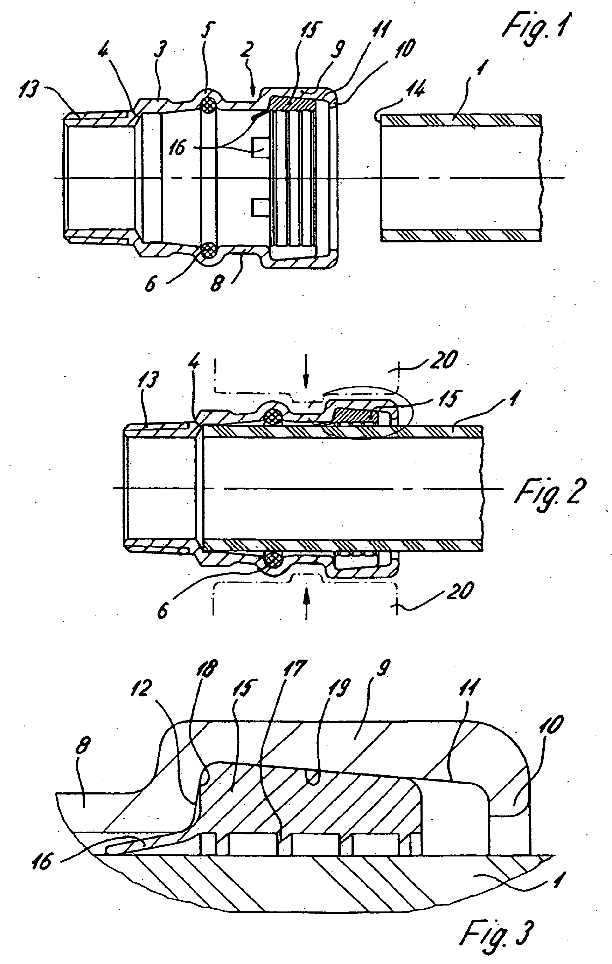

Im Querschnitt ist das Halteelement 15 im wesentlichen rechteckig ausgebildet und liegt mit einer Seitenwand an der Schulter 12 der Aufnahme 9 sowie mit einer äußeren Umfangswand 19 an der konischen Fläche 11 an. Durch die Konizität der Flächen 11 und 19 wird gewährleistet, dass das Halteelement 15 beim Verpressen mit der Seitenfläche 18 gegen die leicht schräg ausgebildete Schulter 12 gedrückt wird und exakt positioniert ist. Das Verpressen ist schematisch in Fig. 2 dargestellt, wobei ein Presswerkzeug 20 ringförmig um den verpressbaren Abschnitt 2 greift und auf die äußere Umfangsfläche drückt und dabei den Dichtring 6 gegen die äußere Umfangsfläche des Rohres 1 festklemmt, um die Verbindung abzudichten. Ferner wird die Aufnahme 9 verpresst, so dass das Halteelement 15 gegen das Rohr 1 gepresst wird und sich die Profilierungen 17 in das Material des Rohres eingraben.

An dem Halteelement 15 sind mehrere integral ausgebildete, umlaufend angeordnete Lippen 16 vorgesehen, die nach Einschieben des Rohres 1 klemmend an der äußeren Umfangsfläche des Rohres 1 anliegen und dieses vorfixieren. Die Lippen 16 sind an der inneren Kante des Halteelementes 15 angeordnet, die dem offenen Ende des verpressbaren Abschnittes 2 gegenüberliegt. Beim Einschieben des Rohres 1 werden die Lippen 16 automatisch ausgerichtet und sorgen durch ihre regelmäßige Anordnung für eine Zentrierung des Rohres 1, das nach dem Einschieben nur durch Überwindung der Klemmkraft der Lippen 16 wieder herausgezogen werden kann.

In dem dargestellten Ausführungsbeispiel ist ein Fitting 3 gezeigt, an dem ein verpressbarer Abschnitt 2 und an dem gegenüberliegenden Ende eine Schraubverbindung 13 angeordnet ist. Es ist jedoch möglich, den verpressbaren Abschnitt 2 an anderen Armaturen, Fittings, T-Stücken etc. anzubringen.

Ferner sind bei dem Ausführungsbeispiel mehrere Lippen 16 gezeigt, die umlaufend an dem Halteelement 15 angeordnet sind. Es ist auch möglich, nur eine umlaufende Lippe oder eine Vielzahl von kleineren Lippen vorzusehen. Ferner ist es möglich, das Halteelement und die Aufnahme derart auszubilden, dass ein symmetrisch ausgebildetes Presswerkzeug eingesetzt werden kann, damit das Presswerkzeug nicht falsch an dem verpressbaren Abschnitt 2 angesetzt werden kann. Hierfür können auch mehrere Halteelemente 15 bzw. Dichtringe 6 an dem verpressbaren Abschnitt vorgesehen sein.

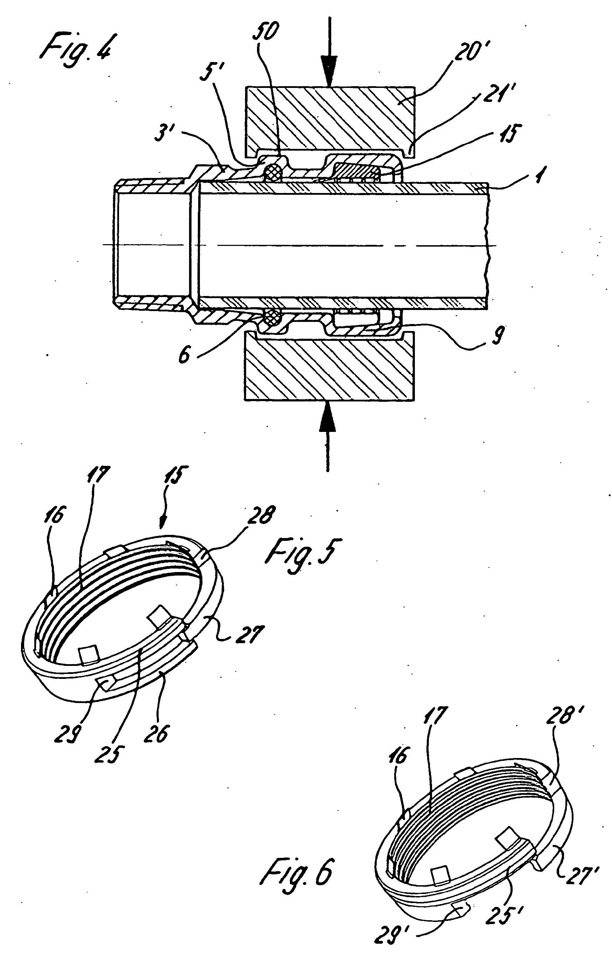

Bei dem in Fig. 4 dargestellten Fitting 3' ist wie bei dem ersten Ausführungsbeispiel ein Halteelement 15 vorgesehen, um eine Vorfixierung des Rohres 1 zu erreichen. Der Dichtungsring 6 ist in einem Wulst 5' aufgenommen, der eine ebene äußere Umfangsfläche 50' aufweist, die etwas breiter ausgebildet ist als der Dichtring 6. Die Aufnahme 9 kann so zusammen mit dem Wulst 5' über ein Presswerkzeug 20' verformt werden, welches eine ebene Pressfläche aufweist und symmetrisch ausgebildet ist. Das Presswerkzeug 20' umgreift mit zwei an gegenüberliegenden Seiten angeordneten Vorsprüngen 21' die Aufnahme 9 und den Wulst 5'.

In Fig 5 ist das Halteelement 15 dargestellt, dass ringförmig mit integral angeformten Lippen 16 und Profilierungen 17 ausgebildet ist, wobei ein Schlitz vorgesehen ist, damit dass Halteelement 15 zusammengedrückt und in die Aufnahme 9 eingesetzt werden kann. Der Schlitz ist U-förmig gestuft ausgebildet, wobei an einem Ende des Halteelementes zwei Schenkel 25 und 26 vorgesehen sind, zwischen die eine an der gegenüberliegenden Seite des Halteelementes 15 verjüngt ausgebildete Spitze 27 einfügbar ist. Die Spitze 27 kann im vormontierten Zustand mit etwas Spiel in Umfangsrichtung angeordnet sein, so dass ein weiteres zusammendrücken möglich ist, bis die Stirnkanten der Schenkel 25 und 26 an einer Schulter 28 und/oder die Spitze 27 an einer Anschlagfläche 29 zwischen den Schenkeln 25 und 26 anliegt.

Bei der in Fig. 6 dargestellten modifizierten Ausführungsform des Halteelementes 15' sind nur zwei an gegenüberliegenden Seiten angeformt Schenkel 25' und 27' vorgesehen, die benachbart und relativ zueinander bewegbar angeordnet sind. Die Bewegung wird durch eine Anschlagfläche 29' für den Schenkel 27' und eine Anschlagfläche 28' für den Schenkel 25' begrenzt. Auch hier ist der Schlitz am Halteelement 15' gestuft ausgebildet. Durch die Schenkel 25' und 27' wird das Rohr vor und beim Verpressen stets vollständig von dem Halteelement 15' umgriffen.

## Patentansprüche

1. Pressverbindungsanordnung, insbesondere für den Installationsbereich, mit einer Armatur oder einem Fitting (3), die bzw. der mit einem verpressbaren Abschnitt (2) versehen ist, in den ein Rohr (1) eingesteckt ist und an dem eine Aufnahme (9) mit einem Halteelement (15) vorgesehen ist, wobei das Halteelement (15) Profilierungen (17) aufweist, die sich beim Verpressen des Abschnitts (2) zur endgültigen Fixierung des Rohres (1) in das Material des Rohres (1) eingraben, **dadurch gekennzeichnet, dass** an dem Halteelement (15) ferner mindestens eine nach innen hervorstehende Lippe (16) zur Vorfixierung des Rohres (1) ausgebildet ist.

2. Pressverbindungsanordnung nach Anspruch 1, **dadurch gekennzeichnet, dass** vor dem Verpressen das Rohr (1) mit einem Spiel zwischen inneren Profilierungen (17) an dem Halteelement (15) angeordnet ist und die mindestens eine Lippe (16) an dem Halteelement (15) das Rohr (1) klemmend vorfixiert.

3. Pressverbindungsanordnung nach Anspruch 1 oder 2, **dadurch gekennzeichnet, dass** das Halteelement (15) in der Aufnahme (9) an dem verpressbaren Abschnitt (2) in axialer Richtung des Rohres (1) fixiert gehalten ist

4. Pressverbindungsanordnung nach einem der Ansprüche 1 bis 3, **dadurch gekennzeichnet, dass** die mindestens eine Lippe (16) sich benachbart zu dem Halteelement (15) auf der dem offenen Ende des verpressbaren Abschnittes (2) abgewandten Seite zwischen verpressbarem Abschnitt (2) und Rohr (1) erstreckt.

5. Pressverbindungsanordnung nach einem der Ansprüche 1 bis 4, **dadurch gekennzeichnet, dass** das Halteelement (15) aus einem Kunststoff oder sonstigen Werkstoff hergestellt ist, der härter ist als das Material an der Außenseite des Rohres (1).

6. Pressverbindungsanordnung nach einem der Ansprüche 1 bis 5, **dadurch gekennzeichnet, dass** das Halteelement (15) einen gestuften Schlitz aufweist, so dass einander gegenüberliegende Endabschnitte des Halteelementes (15) ineinander greifen können.

7. Halteelement (15) für eine Pressverbindung, insbesondere nach einem der vorhergehenden Ansprüche, wobei das Halteelement (15) in eine Aufnahme (9) an einem verpressbaren Abschnitt (2) eines Fittings (3) oder einer Armatur einfügbar ist und an einer einem Rohr (1) zugewandten Innenseite des im wesentlichen ringförmigen Halteelementes Profilierungen (17) vorgesehen sind, die sich bei einem Verpressen in das Material des Rohres (1) eingraben, **dadurch gekennzeichnet, dass** Ferner mindestens eine nach innen hervorstehende Lippe (16) zur Vorfixierung des Rohres (1) an dem Halteelment (15) ausgebildet ist.

8. Halteelement nach Anspruch 7, **dadurch gekennzeichnet, dass** die mindestens eine Lippe (16) elastisch ist und unter Vorspannung an dem Rohr (1) anlegbar ist.

9. Halteelement nach Anspruch 7 oder 8, **dadurch gekennzeichnet, dass** das Halteelement (15) im Querschnitt im wesentlichen rechteckig ausgebildet ist und die mindestens eine Lippe (16) an einer inneren Kante des Halteelementes (15) angeordnet ist.

10. Halteelement nach einem der Ansprüche 7 bis 9, **dadurch gekennzeichnet, dass** das Halteelement (15) einen gestuft ausgebildeten Schlitz aufweist und die endseitigen Abschnitte (25, 26, 27; 25', 27') ineinanderfügbar sind.

11. Halteelement nach einem der Ansprüche 7 bis 10, **dadurch gekennzeichnet, dass** das Halteelement (15) vorzugsweise aus Kunststoff hergestellt ist.

12. Halteelement nach einem der Ansprüche 7 bis 11, **dadurch gekennzeichnet, dass** mehrere Lippen (16) vorgesehen sind, die in Abständen umlaufend an dem Halteelement (15) angeordnet sind.

13. Halteelement nach einem der Ansprüche 7 bis 12, **dadurch gekennzeichnet, dass** die Länge der Lippen (16) deutlich größer als die Dicke der Lippen (16) ist.

## Claims

1. A press connector assembly, in particular for plumbing applications, with a mounting or a fitting (3) comprising a pressable section (2) into which a tube is inserted and on which a receiver (9) with a holding element (15) is provided, the holding element (15) having profiles (17) which penetrate into the material of the tube (1) for final fixation of the tube (1) when pressing the section (2), **characterized in that** furthermore at least one inward protruding lip (16) for preliminary fixation of the tube (1) is provided on the holding element (15).

2. A press connector assembly according to claim 1, **characterized in that** before pressing, the tube (1) is arranged at the holding element (15) with a clearance between the interior profiles (17) and that the at least one lip (16) pre-fixates the tube (1) at the holding element (15) in a clamping manner.

3. A press connector assembly according to claim 1 or 2, **characterized in that** the holding element (15) is held fixed in axial direction of the tube (1) in the receiver (9) at the pressable section (2).

4. A press connector assembly according to one of claims 1 to 3, **characterized in that** the at least one lip (16) extends adjacent to the holding element (15) on the side facing away from the open end of the pressable section (2) between the pressable section (2) and the tube (1).

5. A press connector assembly according to one of claims 1 to 4, **characterized in that** the holding element (15) is made from plastic or from another material which is harder than the material at the outside of the tube (1).

6. A press connector assembly according to one of claims 1 to 5, **characterized in that** the holding element (15) has a staged slot so that opposing end sections of the holding element (15) can engage into each other.

7. A holding element (15) for a press connector assembly, in particular according to one of the preceding claims, wherein the holding element (15) can be inserted into a receiver (9) at a pressable section (2) of a fitting (3) or a mounting, and profiles (17) are provided on an interior side of the substantially annular holding element facing a tube (1) which penetrate into the material of the tube (1) during pressing, **characterized in that** furthermore at least one inward protruding lip (16) for preliminary fixation of the tube (1) is provided on the holding element (15).

8. A holding element according to claim 7, **characterized in that** the at least one lip (16) is elastic and can be placed against the tube (1) with a preload.

9. A holding element according to claim 7 or 8, **characterized in that** the holding element (15) has a substantially rectangular cross section and the at least one lip (16) is located at an inner edge of the holding element (15).

10. A holding element according to one of claims 7 to 9, **characterized in that** the holding element (15) has a staged slot and the end sections (25, 26, 27; 25', 27') can be inserted into each other.

11. A holding element according to one of claims 7 to 10, **characterized in that** the holding element (15) is preferably made from plastic.

12. A holding element according to one of claims 7 to 11, **characterized in that** several lips (16) are provided which are circumferentially arranged in intervals on the holding element (15).

13. A holding element according to one of claims 7 to 12, **characterized in that** the length of the lips (16) is substantially larger than the thickness of the lips (16).

## Revendications

1. Agencement de raccordement à sertissage, en particulier pour le domaine de la plomberie, comprenant un élément de robinetterie ou un raccord (3) qui est pourvu d'une section à sertir (2), dans laquelle est emmanché un tube (1), et dans laquelle est prévu un logement (9) contenant un élément de retenue (15), l'élément de retenue (15) comportant des éléments profilés (17) qui, lors du sertissage de la section (2), mordent dans la matière du tube (1) de manière à assurer la fixation définitive du tube (1),
**caractérisé en ce que** l'élément de retenue (15) est d'autre part conformé avec au moins une lèvre (16) saillant vers l'intérieur, assurant la fixation provisoire du tube (1).

2. Agencement de raccordement à sertissage selon la revendication 1, **caractérisé en ce qu'**avant le sertissage, le tube (1) est placé avec un certain jeu entre des éléments profilés intérieurs (17) de l'élément de retenue (15), et que ladite au moins une lèvre (16) de l'élément de retenue (15) fixe le tube (1) de façon provisoire avec serrage.

3. Agencement de raccordement à sertissage selon la revendication 1 ou 2, **caractérisé en ce que** l'élément de retenue (15) est retenu dans le logement (9), à l'intérieur de la section à sertir (2), de façon immobilisée dans le sens axial du tube (1).

4. Agencement de raccordement à sertissage selon l'une des revendications 1 à 3, **caractérisé en ce que** ladite au moins une lèvre (16) s'étend de façon contiguë à l'élément de retenue (15), entre la section à sertir (2) et le tube (1), du côté qui est éloigné de l'extrémité ouverte de la section à sertir (2).

5. Agencement de raccordement à sertissage selon l'une des revendications 1 à 4, **caractérisé en ce que** l'élément de retenue (15) est fabriqué en une matière plastique ou une autre matière qui est plus dure que la matière de la face extérieure du tube (1).

6. Agencement de raccordement à sertissage selon l'une des revendications 1 à 5, **caractérisé en ce que** l'élément de retenue (15) présente une encoche étagée, de manière telle que des sections terminales de l'élément de retenue (15), qui sont opposées l'une à l'autre, puissent s'emboîter l'une dans l'autre.

7. Elément de retenue (15) pour un raccordement à sertissage, en particulier selon l'une des revendications précédentes, l'élément de retenue (15) pouvant être inséré dans un logement (9) ménagé dans une section à sertir (2) d'un raccord (3) ou d'un élément de robinetterie, et des éléments profilés (17) étant prévus sur une face intérieure de l'élément de retenue essentiellement annulaire, qui est tournée vers un tube (1), ces éléments profilés mordant dans la matière du tube (1) lors du sertissage,
**caractérisé en ce que**, par ailleurs, au moins une lèvre (16) saillant vers l'intérieur est conformée sur l'élément de retenue (15), afin d'assurer une fixation provisoire du tube (1).

8. Elément de retenue selon la revendication 7, **caractérisé en ce que** ladite au moins une lèvre (16) est élastique et peut se placer en contact avec le tube (1) sous une précontrainte.

9. Elément de retenue selon l'une des revendications 7 ou 8, **caractérisé en ce que** l'élément de retenue (15) présente une section transversale de configuration essentiellement rectangulaire, et que l'au moins une lèvre (16) est aménagée à un bord intérieur de l'élément de retenue (15).

10. Elément de retenue selon l'une des revendications 7 à 9, **caractérisé en ce que** l'élément de retenue (15) comporte une encoche de configuration étagée, et que les parties terminales (25, 26, 27; 25', 27') peuvent s'emboîter les unes dans les autres.

11. Elément de retenue selon l'une des revendications 7 à 10, **caractérisé en ce que** l'élément de retenue (15) est de préférence réalisé en matière plastique.

12. Elément de retenue selon l'une des revendications 7 à 11, **caractérisé en ce que** plusieurs lèvres (16) sont prévues, qui sont disposées à intervalles sur le pourtour de l'élément de retenue (15).

13. Elément de retenue selon l'une des revendications 7 à 12, **caractérisé en ce que** la longueur des lèvres (16) est nettement supérieure à l'épaisseur des lèvres (16).
